# EUROPÄISCHE PATENTANMELDUNG

(11) **EP 1 657 668 A1**
(43) Veröffentlichungstag der Anmeldung: **17.05.2006**
(21) Anmeldenummer: 04026669.4
(22) Anmeldetag: 10.11.2004
(51) Int. Cl.: G06Q 10/00

(54) **Transaktionssystem für Beförderungsleistungen und Verfahren zum Befördern und Abrechnen von Sendungen**

(71) Anmelder: Deutsche Post AG, 53113 Bonn (DE)
(72) Erfinder: König, Manfred, 53113 Bonn (DE); Rossa, Peter, 53604 Bad Honnef (DE)
(74) Vertreter: Jostarndt, Hans-Dieter

(57) **Zusammenfassung**

Die Erfindung betrifft Transaktionssystem zum Verarbeiten von Transaktionsinformationen von wenigstens einem Transportunternehmen, mit einem Mittel zum Erfassen von versandrelevanten Daten, einem Mittel zum Übertragen der versandrelevanten Daten als Datentelegramme und mit einem Abrechnungsmodul (ABT, BBF).

Erfindungsgemäß zeichnet sich das Transaktionssystem dadurch aus, dass das Mittel zum Erfassen von versandrelevanten Daten so ausgestaltet ist, dass die versandrelevanten Daten für eine oder mehrere Transporteinheiten erfasst werden können, dass das Mittel zum Übertragen der versandrelevanten Daten über eine Datenleitung mit dem Abrechnungsmodul(ABT, BBF) verbunden ist, wobei das Abrechnungsmodul (ABT, BBF) wenigstens ein Mittel zum Empfangen des Datentelegramms enthält, dass das Abrechnungsmodul (ABT, BBF) ein Mittel zum Errechnen einer vorläufigen Abrechnungsinformation aufweist, dass das Abrechnungsmodul (ABT, BBF) mit wenigstens einem Speicher für ein Zwischenspeichern der vorläufigen Abrechnungsinformation verbindbar ist, wobei der Speicher einen geschützten Bereich aufweist, der ein nachträgliches Ändern und/oder Löschen der vorläufigen Abrechnungsinformation verhindert.

Die Erfindung betrifft ferner ein Verfahren zum Befördern und Abrechnen von Sendungen.

## Beschreibung

Die Erfindung betrifft ein Transaktionssystem zum Verarbeiten von Transaktionsinformationen von wenigstens einem Transportunternehmen, mit einem Mittel zum Erfassen von versandrelevanten Daten, einem Mittel zum Übertragen der versandrelevanten Daten als Datentelegramme und mit einem Abrechnungsmodul.

Die Erfindung betrifft ferner ein Verfahren zum Befördern von Transportgütern, wobei eine Abrechnung von Transportleistungen erfolgt.

Ein gattungsgemäßes Versandtransaktionssystem sowie ein gattungsgemäßes Verfahren sind aus der Europäischen Patentschrift EP 0 938 715 B1 sowie ihrer deutschen Übersetzung DE 697 07 009 T2 bekannt.

Das gattungsgemäße Versandtransaktionssystem sieht eine Umgebung zum Verarbeiten von Transaktionsinformationen mehrerer Absender und Versandunternehmen vor. Dieses bekannte Versandtransaktionssystem weist einen zentralen Prozessor auf, der auf Transaktionsinformationen anspricht, Berechtigungsprofilkriterien abspeichert und feststellt, ob die Transaktionsinformationen den Berechtigungsprofilkriterien entsprechen, wobei die Berechtigungsprofilkriterien Informationen über autorisierte Benutzer enthalten.

Es ist wünschenswert, ein Versandtransaktionssystem bereitzustellen, das sowohl einen möglichst geringen Aufwand erfordert als auch eine schnelle und zeitnahe Abrechnung von Beförderungsleistungen ermöglicht.

Erfindungsgemäß wird ein Versandtransaktionssystem nach Anspruch 1 bereitgestellt.

Die Erfindung beinhaltet ferner ein Verfahren zum Befördern und Abrechnen von Transportgütern gemäß Anspruch 7.

Vorteilhafte Weiterbildungen des Versandtransaktionssystems sind in der nachfolgenden Beschreibung offenbart und Gegenstand der Patentansprüche 2 bis 6.

Bevorzugte Ausführungsformen des Verfahrens sind gleichfalls nachfolgend offenbart und ferner Gegenstand der Ansprüche 8 bis 17.

Die Erfindung sieht vor ein Transaktionssystem zum Verarbeiten von Transaktionsinformationen so auszugestalten, bzw. ein Verfahren zum Transportieren und/oder Abrechnen von Transportdienstleistungen so auszugestalten, dass eine Abrechnung für eine oder mehrere Transporteinheiten erfolgt, dass zu den Transporteinheiten gehörende versandrelevanten Daten erfasst und an ein Abrechnungsmodul weitergeleitet werden.

Die Weiterleitung der versandrelevanten Daten an das Abrechnungsmodul erfolgt in einer besonders bevorzugten Ausführungsform der Erfindung in Datentelegrammen.

Bei der Transporteinheit handelt es sich vorzugsweise um ein Behältnis für eines oder mehrere Transportgüter und/oder ein digitales Abbild des Behältnisses, beispielsweise eine der Sendungseinheit zugeordnete Identifikationsangabe.

Das Abrechnungsmodul ist so ausgestaltet, dass es einen Speicher enthält, der einen geschützten Bereich aufweist, der ein nachträgliches Ändern und/oder Löschen von gespeicherten Informationen verhindert.

Ein wichtiges Beispiel einer Information, die vor einem nachträglichen Ändern und/oder Löschen möglichst geschützt sein sollte, ist eine für die Transporteinheit ermittelte vorläufige Abrechnungsinformation.

Es ist besonders vorteilhaft, dass die vorläufige Abrechnungsinformation bei Eintritt eines Ereignisses in eine endgültige Abrechnungsinformation umgewandelt wird.

Eine besonders bevorzugte Ausführungsform der Erfindung zeichnet sich dadurch aus, dass ein Gewicht von in den Transporteinheiten befindlichen Transportgütern berücksichtigt wird.

Ferner ist es zweckmäßig, dass bei der Abrechnung der Transportleistung eine zu erwartende Anzahl von in den Transporteinheiten befindlichen Transportgütern berücksichtigt wird.

Eine besonders vorteilhafte Ausgestaltung der Erfindung sieht vor, dass wenigstens ein Teil der Transportgüter Postsendungen sind.

Hierbei ist es besonders zweckmäßig, dass die Abrechnung in Abhängigkeit von einer Sendungseinheit und/oder in Abhängigkeit von einer Sendungskategorie und/oder in Abhängigkeit von mehreren Sendungskategorien erfolgt.

Eine Einteilung von Postsendungen in verschiedene Sendungskategorien ist grundsätzlich bekannt und trägt dem unterschiedlichen Bearbeitungsaufwand bei weiteren Bearbeitungsschritten, beispielsweise der Sortierung in Briefzentren und der Auslieferung, Rechnung.

Die Vorteile der Erfindung lassen sich jedoch auch außerhalb des Transportes von Postsendungen erzielen.

Beispielsweise ermöglicht die Erfindung eine Abrechnung der Transportleistungen mit einem möglichst geringen Bedarf an zu speichernden Informationen.

Die Erfindung ermöglicht ferner eine schnelle Abrechnung von Versandleistungen.

Ferner ist es möglich, die Erfindung für eine zeitnahe Abrechnung von Versanddienstleistungen einzusetzen.
Ein weiterer durch die Erfindung erzielbarer Vorteil ist, dass sie eine schnelle und zuverlässige Datenspeicherung ermöglicht.

Außerdem ist es erfindungsgemäß möglich, ein Computersystem mit einem möglichst geringen Speicherbedarf einzusetzen.

Außerdem kann durch den Einsatz der Erfindung der Datenübertragungsaufwand verringert werden.

Die Erfindung eignet sich für einen Einsatz bei der Beförderung und/oder Abrechnung beliebiger Transportgüter.

Da die Erfindung insbesondere eine Abrechnung einer Vielzahl von Sendungen, insbesondere von massenhaft verschickten Sendungen ermöglicht, ist es besonders vorteilhaft, sie zur Abrechnung von Postsendungen einzusetzen.

Ein besonders bevorzugter Einsatz der Erfindung betrifft eine Abrechnung zwischen wenigstens zwei Transportunternehmen.

Ein derartiger Einsatz erfolgt in einer besonders bevorzugten Ausführungsform der Erfindung dadurch, dass eine Abrechnung in Abhängigkeit von einem vorgesehenen Transportweg erfolgt.

Weitere Vorteile, Besonderheiten und zweckmäßige Weiterbildungen der Erfindung sind Gegenstand der Unteransprüche und der nachfolgenden Darstellung bevorzugter Ausführungsbeispiele anhand der Zeichnungen:

Von den Zeichnungen zeigt:
- Fig. 1: eine Prinzipdarstellung von Relationen zwischen einzelnen Modulen des erfindungsgemäßen Transaktionssystems;
- Fig. 2: eine Prinzipdarstellung von Modulen für eine Prozessintegration Endvergütung - Statistik;
- Fig. 3: eine Prinzipdarstellung von Modulen für eine Prozessintegration Endvergütung - Transportabrechnung;
- Fig. 4: eine Prinzipdarstellung von Modulen für eine Prozessintegration BdV-Wesen - Transportabrechnung;
- Fig. 5: eine Prinzipdarstellung von Modulen für eine Prozessintegration BdV-Wesen - Abrechnung Endvergütungen;
- Fig. 6: eine Prinzipdarstellung von Modulen für eine Prozessintegration BdV-Wesen - Nachforschung/Ersatz;
- Fig. 7: eine Prinzipdarstellung von Modulen für eine Prozessintegration BdV-Wesen - Statistik und
- Fig. 8: eine Prinzipdarstellung von Modulen für eine Prozessintegration zur Nachforschung/zum Ersatz - Abrechnung Endvergütung und Transportabrechnung.

Obwohl die Erfindung sich grundsätzlich auch für einen Einsatz innerhalb eines einzelnen Transportunternehmens eignet, ist es besonders zweckmäßig, die Erfindung für eine Abrechnung zwischen verschiedenen Transportunternehmen einzusetzen.

So ist es beispielsweise möglich, Leistungen zwischen verschiedenen Speditionen abzurechnen.

Es ist besonders vorteilhaft, die Erfindung für Transportvorgänge und/oder Abrechnungsvorgänge von Transportunternehmen einzusetzen, die große Sendungsmengen transportieren. Dies ist beispielsweise bei der Abrechnung zwischen verschiedenen Postunternehmen einzusetzen. Insbesondere bei einem Transport von Postsendungen, die Einzugsbereiche verschiedener Postunternehmen erreichen, ist die Erfindung besonders vorteilhaft.

Die nachfolgend dargestellte besonders bevorzugte Ausführungsform der Erfindung betrifft ein integriertes System mit Verfahren zur Abrechnung von postalischen Leistungen zwischen Postgesellschaften einerseits und andererseits der Abrechnung von Dienstleistungsunternehmen, welche den postalischen Versand zwischen den Postgesellschaften vornehmen.

Besonders bevorzugte Ausführungsformen der Erfindung enthalten eines oder mehrere der nachfolgend dargestellten Module.

Durch einen Einsatz von einem oder mehreren der dargestellten Module ist eine automatisierte Handhabung von verschiedenen Abrechnungsprozessen möglich.

Beispiele für derartige Abrechnungsprozesse sind:
- Abrechnung Endvergütung für postalischen Versand;
- Transportabrechnung für postalischen Versand;
- BDV-Wesen als standardisierter Korrekturprozess;
- Nachforschung / Ersatz für die Be- und Abrechnung von verlorenen/beschädigten Sendungen;
- Erstellung einer Statistik im Rahmen der Entgeltfindung für die Abrechnungsprozesse entsprechend vorgegebener Abrechnungskriterien.

Nachfolgend wird ein besonders bevorzugtes erfindungsgemäßes Verfahren als SICMA (System for international cargo and mail accounting) bezeichnet.

Ein derartiges System eignet sich insbesondere für eine Abrechnung von internationalen Versandleistungen, vorzugsweise zwischen verschiedenen Postunternehmen. Die dargestellten Ausführungsbestandteile und Vorteile sind jedoch auch bei einem Transport und/oder einer Abrechnung innerhalb eines Landes, sowie innerhalb eines einzelnen Transportunternehmens einsetzbar. Ein Einsatz bei Postunternehmen ist gerade wegen des dort vorhandenen besonders hohen Sendungsaufkommens besonders vorteilhaft.

Ein Beispiel einer zusätzlich zu der Abrechnungsinformation speicherbaren logistischen Information ist eine Belegidentifikation.

Mit der Belegidentifikation kann auch die Abrechnungsinformation gespeichert werden, welche in den Abrechnungsbeleg eingeflossen ist (progressive und retrograde Nachvollziehbarkeit).

Derartige Informationen stellen eine besonders bevorzugte Ausführungsform der erfindungsgemäßen vorläufigen Abrechnungsinformation dar.

Ferner ist es zweckmäßig, dass mit der Abrechnungsinformation der Status der Abstimmung gespeichert wird, so dass sich daraus die Änderbarkeit im Sinne einer vorläufigen oder abschließenden Abrechnung erkennen lässt.

Eine besonders bevorzugte Ausführungsform der Erfindung zeichnet sich dadurch aus, dass mit der Abrechnungsinformation der Status des Beleges gespeichert wird, so dass daraus die weitere Belegverarbeitung gesteuert werden kann (hiermit ist gemeint, dass der Status eines Abstimmungsbeleges die vor- und nachgelagerten Prozesse beeinflusst. Beispiel: So lange der Beleg x noch nicht erzeugt wurde, können Daten in den Beleg x einfließen. Weiter: Wenn der Beleg x erzeugt wurde, können keine neuen/geänderten Daten in den Beleg x einfließen. Weiter: Erst wenn der Beleg x abgestimmt ist, dann kann der Beleg y mit Daten aus dem Beleg x erzeugt werden, usw.).

Obwohl die Erfindung sich grundsätzlich für eine Abrechnung beliebiger Versandleistungen eignet, ist ein Einsatz der Erfindung zur technischen Handhabung postalisch relevanter Abrechnungsprozesse besonders vorteilhaft.

Zweckmäßigerweise enthält das System einzelne oder mehrere der nachfolgend dargestellten Systemkomponenten einschließlich der systemseitig realisierten beziehungsweise realisierbaren Abläufe. Auf dieser Basis werden die Besonderheiten der technischen Applikation dargestellt, welche in der Integration der Prozessdaten begründet liegen. Darüber hinaus lässt sich im Rahmen der realisierten gemeinsamen Datenhaltung eine zentrale Sicht auf die internationale postalische Abrechnung als Ganzes darstellen. Hierdurch wird eine höchstmögliche Sicherung von Entgeltinformationen gewährleistet, die den rechtlichen Grundsätzen ordnungsmäßiger DV-gestützter Buchführungssysteme (GoBS) auch für die hier dargestellten Abrechnungsprozesse in vollem Umfang entspricht.

Nachfolgend werden besonders bevorzugte Komponenten der technischen Module beschrieben. Obwohl auch ein Einsatz einzelner Module vorteilhaft ist, ermöglicht das Zusammenwirken der einzelnen Module besonders vorteilhafte Wirkungen, insbesondere im Hinblick auf eine möglichst schnelle und zuverlässige Handhabung und oder Abrechnung von Versanddienstleistungen.

Insbesondere ist es zweckmäßig, dass ein Ergebnis der Abrechnung als eine vorläufige Abrechnungsinformation in einem Speicher gespeichert wird.

Ferner wird in einer besonders zweckmäßigen Ausführungsform das Transaktionssystem so ausgestaltet, bzw. das Verfahren so durchgeführt, dass überprüft wird, ob Änderungen von Eigenschaften der Transporteinheiten und/oder des Transportweges erfolgten, und dass für den Fall, dass eine derartige Änderung erfolgte, eine weitere vorläufige Abrechnung in Form einer Rechnungsinformation in dem Speicher gespeichert wird.

Im Rahmen der Abrechnung der Endvergütung werden auf Basis der von Abrechnungsprozessen für Brief, Fracht und Transit (jeweils Import / Export) zeitnah und vollständig abrechnungsrelevante Daten der Logistik entweder manuell erfasst oder über eine eigens definierte Datenschnittstelle in SICMA zu abrechnungsrelevanten Belegen verarbeitet. Im Beleg werden Informationen zum Geschäftsvorfall gespeichert, wodurch innerhalb der Abrechnung eine eindeutige Referenzierung (im Sinne von Nachvollziehbarkeit) gewährleistet ist. Aus den Belegen werden automatisch offene Posten in einer eigenen Nebenbuchhaltung gebucht, die dann zwischen den Postgesellschaften zu resultierenden Forderungen oder Verbindlichkeiten je Geschäftspartner verrechnet werden. Der Zahlungsausgleich erfolgt entweder durch ein speziell entwickeltes Clearing-Verfahren oder per Einzelabrechnung durch eigens entwickelte Zahlprogramme.

Eine besonders bevorzugte Ausführungsform der Erfindung ermöglicht eine schnelle und zeitnahe Erfassung von Abrechnungsbeträgen.

Bei den eingesetzten Abrechnungsinformationen kann es sich grundsätzlich um beliebige Informationen handeln, auf deren Grundlage eine Abrechnung der Transportleistungen erfolgen kann. Insbesondere gehören hierzu Forderungen und Verbindlichkeiten.

Die Abrechnungsinformationen sind vorzugsweise in einem Standarddatenformat gespeichert.

Schnittstellen für einen Zugang zu den Dateninformationen sind so gestaltet, dass ein möglichst uneingeschränkter Einsatz der Abrechnungsinformationen ermöglicht wird.

In einer bevorzugten Ausführungsform der Erfindung ist eine automatisierte Datenübertragung vorgesehen.

Es ist besonders vorteilhaft, Forderungen und Verbindlichkeiten periodengerecht innerhalb des Rechnungswesens darzustellen. Hierzu ist es vorteilhaft, dass die logistischen Daten - insbesondere die für die Abrechnung einsetzbaren versandrelevanten Daten - die logistischen Daten zum Zeitpunkt ihrer Entstehung in SICMA gebucht werden. In einer besonders bevorzugten Ausführungsform verläuft der Prozess der Abrechnung von Endvergütungen zwischen Postgesellschaften zeitlich versetzt zu den logistischen Strömen über mehrstufige Abstimmungen. Hier werden unabhängig von den logistischen Prozessen Korrekturen der Abrechnungen erfasst. In einer besonders bevorzugten Ausführungsform kommt ein Abstimm- und Korrekturmanagement zum Einsatz, welches sämtliche Änderungen mit Bezug zu den Ursprungsbelegen speichert und die Daten buchhalterisch nachvollziehbar aktualisiert.

Aufgrund der mehrstufigen Abstimmung der Abrechnungen kann es vorkommen, dass die gebuchten Forderungen und Verbindlichkeiten gar nicht oder nicht vollständig durch Zahlung ausgeglichen werden müssen. Damit nur der tatsächlich abgestimmte Forderungs- und Verbindlichkeitsbestand in die Zahlungen einfließt, sieht eine besonders bevorzugte Ausführungsform der Erfindung einen Einsatz von Modulen vor, welche die offenen Posten entsprechend ihres Abstimmgrades markieren, um im Rahmen der automatischen Zahlungsläufe eine selektive Verarbeitung sicherzustellen.

Die Erfindung eignet sich sowohl für eine unmittelbare Abrechnung zwischen zwei Transportunternehmen als auch für eine Abrechnung über eine Zentrale Clearing-Stelle.

Eine Abrechnung über eine Zentrale Clearing-Stelle erfolgt in einer besonders bevorzugten Ausführungsform wie folgt: Abhängig von den Stammdateneinstellungen des Abrechnungspartners werden dessen offene Posten im Rahmen des Zahlprogramms gesondert behandelt. Die Programme in SICMA ermöglichen die Zusammenfassung von Forderungen und Verbindlichkeiten unterschiedlicher Abrechnungspartner zu einer Zahlung.

Ein besonders bevorzugter Einsatzbereich betrifft einen Transport, bei dem Postunternehmen externe Transportdienstleister beauftragen.

Die Transportunternehmen stellen für die übergebenen Consignments (Übergabenachweise) periodische Rechnungen, die in SICMA geprüft und bezahlt werden.

Die Prüfung der zum Teil per EDI elektronisch übermittelten Rechnungen erfolgt gegen die im Export generierten Logistikdaten, die in SICMA entweder manuell oder über eine standardisierte Schnittstelle aus einem Produktionssystem verarbeitet werden können.

Das erfindungsgemäße Transport- und Abrechnungsverfahren eignet sich auch zu einer automatisierten Bearbeitung von Abrechnungsvorgängen, die entsprechend von Vorgaben durchgeführt werden.
Ein Beispiel für derartige einzuhaltende Vorgaben sind die Anforderungen zum Beheben von Unregelmäßigkeiten durch Übermittlung von Bulletins de Verification (BdV). Hierdurch werden Unregelmäßigkeiten im Austausch von postalischem Versand zwischen den internationalen Auswechslungsstellen gemeldet. In SICMA wurde hierfür ein eigenes Anwendungsmodul entwickelt, welches es ermöglicht, abgehende Meldungen zu erstellen sowie eingehende Meldungen zu erfassen und bezüglich des Abstimmungsergebnisses zu bearbeiten. Weiterhin sind standardisierte Antwortschreiben integriert, welche auf Basis der geltenden Vertragsverhältnisse zu einer Standardisierung der Verfahren und Absicherung der Entgeltänderungen im Rahmen der rechtlichen Gegebenheiten führen. Als Folge der Abstimmung von BdV zwischen den Postgesellschaften werden Unregelmäßigkeiten aufgeklärt und somit eine korrekte Datenbasis hergestellt, die direkt oder indirekt die Abrechnung der Endvergütungen und der Transportabrechnungen beeinflusst. Daher werden sämtliche BdV-Daten in SICMA mit Bezug zum logistischen Ursprungsbeleg abgespeichert. Falls eine BdV mehrfach abgestimmt werden muss, wird jede Version einzeln abgespeichert, wodurch die Nachvollziehbarkeit gewährleistet wird.

Eine besonders bevorzugte Ausführungsform der Erfindung sieht vor, Änderungen von Abrechnungsinformationen mit Bezug zu einem logistischen Ursprungsbeleg zu speichern.

Dies hat den Vorteil, dass die Schnelligkeit der Abrechnung und die Manipulationssicherheit weiter erhöht werden.

Derartige Änderungen von Abrechnungsinformationen können sich beispielsweise aufgrund des dargestellten Verfahrens zum Übermitteln von Unregelmäßigkeiten im Austausch von postalischen Versendungen ergeben.

Zur weiteren Erhöhung der Datensicherheit und der Nachvollziehbarkeit, sowie der Manipulationssicherheit ist es besonders zweckmäßig die Abrechnungsinformationen mit Versionsangaben zu verknüpfen.

Eine besonders bevorzugte Ausführungsform der Erfindung zeichnet sich dadurch aus, dass ferner Abrechnungsprozesse für besondere Sendungen durchgeführt werden können und dass auch für Ansprüche bezüglich der Haftung und der Zahlung von Ersatzansprüchen - insbesondere bei Verlust oder Beschädigung dieser Sendungen, beispielsweise Wertbriefe, Einschreiben und Wertpakete, Abrechnungsvorgänge durchgeführt werden können.

Im Rahmen dieses Abrechnungsprozesses werden Nachforschungsaufträge von Absendern besonderer Sendungen (Wertbrief, Einschreiben, Wertpaket) bezüglich der Haftung und der Zahlung von Ersatzansprüchen bearbeitet.

In SICMA werden Verbindlichkeiten aus Ersatzansprüchen entweder manuell erfasst oder über eine Schnittstelle zu einem Nachforschungssystem maschinell zu Eingangsrechnungen verarbeitet, gebucht und bezahlt.
Forderungen, die sich aus Ersatzleistungen ergeben, welche nicht durch das eigene Unternehmen zu verantworten sind, können ebenfalls in SICMA entweder manuell als Ausgangsrechnungen erfasst oder über eine Schnittstelle zu einem Nachforschungssystem maschinell verarbeitet, gebucht und in Rechnung gestellt werden. Die entsprechenden Zahlungsein- und -ausgänge werden in SICMA verarbeitet

Ferner ist es durch einen Einsatz dieser Ausführungsform der Erfindung möglich, Ersatzleistungen an Absender im Inland (bezogen auf das Transportunternehmen, für das die Abrechnung durchgeführt wird) zu berechnen.

Eine weitere bevorzugte Ausführungsform der Erfindung zeichnet sich durch einen Einsatz von Modulen aus, welche in Abhängigkeit des Abrechnungspartners verschiedene Zahlungsarten ermöglichen: direkt, über ein Clearing-Verfahren oder durch Verrechnung mit den Endvergütungen.

Eine besonders bevorzugte Ausführungsform der Erfindung zeichnet sich dadurch aus, dass bei einer Abrechnung Statistikinformationen eingesetzt werden.

Vorzugsweise erfolgt eine Abrechnung so, dass sowohl eine gewichtsbezogene, als auch eine stückbezogene Abrechnungskomponente berücksichtigt werden und in die Berechnung der Abrechnungsinformation eingehen.

Falls die Logistikdaten lediglich Gewichtsinformationen enthalten, ist es zweckmäßig, anhand der Gewichtsinformationen und eines vorher festlegbaren Statistikverfahrens Stückzahlen zu ermitteln. Hierbei zählt die empfangende Postgesellschaft die eingehenden Behälter entsprechend einer vertraglich vereinbarten Stichprobenrate aus. Das Ergebnis der Auszählungen kann in einer für SICMA entwickelten, Web-basierten Anwendung erfasst und über eine Schnittstelle zu papiergebundenen Abstimmdokumenten verarbeitet werden. Die Papierbelege werden zwischen den Postgesellschaften abgestimmt. Das Resultat der Abstimmung ist ein gewichtsbasierter Stückwert (IPK := Items per kilo), welcher bei der Abrechnung der Endvergütungen berücksichtigt werden muss.

Die Abstimmung des IPK-Wertes erfolgt zeitlich versetzt zur Buchung der Endvergütungen. Somit kann die laufende Buchung nur auf Basis vergangenheitsbezogener IPK-Werte erfolgen, was zu einer Unschärfe der tatsächlichen Forderungen und Verbindlichkeiten führt. Würde man mit einer Korrektur der Buchungen bis zum Zeitpunkt der abgestimmten IPK-Werte warten, so ergäben sich hieraus zwangsläufig mehr oder weniger hohe periodenfremde Erlöse und/oder Verbindlichkeiten.

Daher wurde in SICMA ein Berechnungsverfahren für den IPK-Wert entwickelt, welches auf Basis der erfassten statistischen Daten und unter Berücksichtigung von saisonalen Schwankungen einen Trendwert ermittelt, welcher periodisch aktualisiert und in den laufenden Buchungen der logistischen Daten berücksichtigt wird. Unabhängig vom Ausgang der Abstimmung des IPK-Wertes wird das Risiko falscher Forderungen und/oder Verbindlichkeiten minimiert.

Für den Fall, dass im Rahmen bilateraler Abstimmungen ein IPK-Wert vereinbart wird, der von dem in SICMA errechneten Wert abweicht, kann durch einen in SICMA entwickelten Simulationsreport die durch die Abweichung resultierende, abrechnungsrelevante Differenz ermittelt und im Rahmen einer Korrekturbuchung systemseitig erfasst werden. Durch die Kombination aus Simulationsreport und Vorschaurechnung können die Entgeltdaten zeitnah und buchhalterisch korrekt dargestellt werden. Die Automatisierung des Verfahrens schließt eine manuelle Manipulierbarkeit der Entgeltinformationen weitestgehend aus.

Obwohl bereits ein Einsatz einzelner Module vorteilhaft ist, wird durch ein Zusammenwirken der Module insbesondere ihre Integration in ein Gesamtsystem die Datenqualität weiter erhöht.

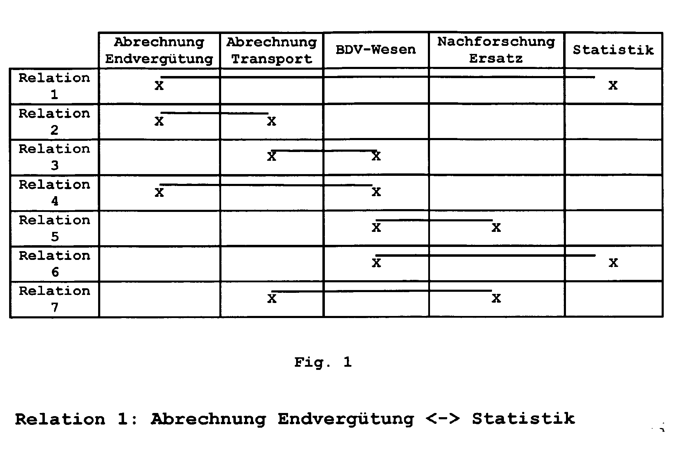

Fig.1 beschreibt die zentralen Relationen der technischen Module in integrativer Hinsicht, welche in den folgenden Abschnitten dann jeweils einzeln dargestellt werden. Die Beschreibung der einzelnen Relationen erfolgt zunächst in Form einer Architektur / Prozessdarstellung, auf die eine Beschreibung des Ablaufes folgt. Abschließend werden dann jeweils die besonders bevorzugten Bestandteile der Relation aufgeführt.

### Relation 1: Abrechnung Endvergütung <-> Statistik

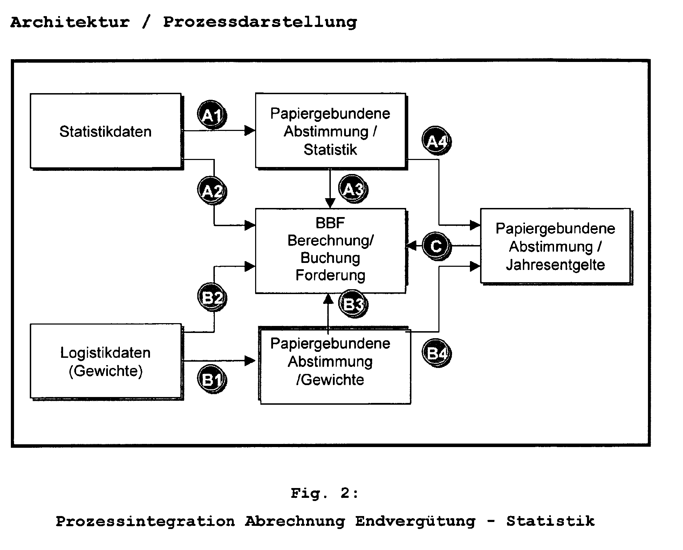

Die in Fig. 2 dargestellte Relation betrifft Briefsendungen im Import, welche nach den vertraglich vereinbarten statistischen Verfahren abgerechnet werden.
Es ist besonders vorteilhaft, bei der Ermittlung der Abrechnungsdaten Daten einzusetzen, die sich aus mehreren oder gegebenenfalls - was besonders bevorzugt ist - allen der nachfolgend ermittelten Daten ergeben, aus dem in logistischen Prozessen ermittelten Gewicht, aus den papiergebundenen Abstimmungsverfahren für Gewichte, sowie Statistiken und Entgeltabrechnungen.

Hierdurch ist es möglich, eine zeitnahe, vollständige und korrekte Buchung von Forderungen vorzunehmen.

Nachfolgend wird eine besonders bevorzugte Ausführungsform der Erfindung dargestellt, welche es ermöglicht, auf Grundlage der vorläufigen Abrechnungsdaten endgültige Abrechnungsdaten für die Ermittlung einer Endvergütung zu ermitteln. Eine Prinzipdarstellung einer besonders zweckmäßigen Anordnung der Module, sowie einer zugehörigen Prozessintegration zur Abrechnung einer Statistikdaten berücksichtigenden Endvergütung darstellen ist aus Fig. 2 ersichtlich.

### A1

Im Rahmen von Auszählungen beim Wareneingang werden Stückzahlen in Bezug zu Gewichten erhoben und systemseitig erfasst. Diese Daten werden in SICMA zu papiergebundenen Abstimmformularen verarbeitet, die die Basis für die Festlegung eines IPK-Wertes bilden.

### A2

Damit bereits zum Zeitpunkt der Leistungserbringung ein stückbasierter Preis für die Buchung von Forderungen ermittelt werden kann, wird vom System auf Basis der Vergangenheitswerte einmal monatlich ein statistischer Trendwert für die laufende Abrechnung ermittelt, welcher für die Buchung der Forderungen im Folgemonat herangezogen wird.

### B1

Auf Basis des Wareneinganges erfolgt ein Abgleich der Sendungsgewichte mit den Begleitpapieren und die systemseitige Erfassung. Die Sendungsdaten werden systemseitig zu Abstimmdokumenten verarbeitet, die die Basis für die Abrechnung der gewichtsbezogenen Entgelte darstellen.
B2 Damit bereits zum Zeitpunkt der Leistungserbringung eine entsprechende Forderung im System gebucht werden kann, werden die gewichtsbezogenen Preise der Sendungsströme noch vor Abstimmung der papiergebundenen Formulare ermittelt und systemseitig gebucht. Preisfindung, Kontenfindung und Buchung erfolgen automatisiert. Der manuelle Eingriff ist auf die Bearbeitung von Verarbeitungsfehlern beschränkt.

### A3

Im Rahmen der Abstimmung der vom System generierten Statistikformulare wird innerhalb eines vorgebbaren Abrechnungsinterwalles, beispielsweise monatlich oder jährlich, ein IPK-Wert festgelegt, welcher rückwirkend für das abgestimmte Abrechnungsjahr zur Entgeltbestimmung herangezogen wird. Da die Buchung der Entgelte aber bereits unterjährig mit voraussichtlichen IPK-Werten (siehe A2) erfolgt ist, muss nach der endgültigen Abstimmung des IPK-Wertes ggf. eine Korrektur der unterjährig gebuchten Forderungen erfolgen. Dies geschieht in SICMA durch einen eigens programmierten sog. Simulationsreport, welcher die abrechnungsrelevanten Entgeltdifferenzen ermittelt, die durch eine Korrektur des abgestimmten IPK-Wertes entstehen. Die mit dem Report festgestellte Entgeltdifferenz kann systemseitig in eine Korrekturbuchung übernommen werden, die im Rahmen der wiederum papiergebundenen Abstimmung der Jahresentgelte automatisch berücksichtigt wird.

### B3

Im Rahmen der Abstimmung der durch das System generierten Gewichtsaufstellungen ergeben sich Korrekturen, welche Auswirkungen auf die bereits gebuchten Forderungen haben. Das in SICMA integrierte Abstimm- und Korrekturwesen ermöglicht eine inhaltliche Änderung der abzustimmenden Formulare. Die so erfassten Korrekturen erzeugen neue Abrechnungsbelege, die zum einen den Forderungsbestand entsprechend korrigieren und zum anderen in den wiederum papiergebundenen Formularen der Jahresabstimmung berücksichtigt werden.

### A4

Die Daten der abgestimmten Statistikformulare werden systemseitig in Jahresabrechnungen zusammengefasst, in welche auch die Abstimmergebnisse der Gewichtsaufstellungen einfließen. Die Überleitung der Informationen erfolgt systemgestützt und in Abhängigkeit vom Status der Formulare. Somit ist gewährleistet, dass eine Jahresrechnung erst nach Abstimmung der Statistikformulare und der Gewichtsaufstellungen erstellt werden kann.

### B4

Die Daten der abgestimmten Gewichtsaufstellungen werden systemseitig in Jahresabrechnungen zusammengefasst, in welche auch die Abstimmergebnisse der Statistikformulare einfließen. Die Überleitung der Informationen erfolgt systemgestützt und in Abhängigkeit vom Status der Formulare. Somit ist gewährleistet, dass eine Jahresrechnung erst nach Abstimmung der Statistikformulare und der Gewichtsaufstellungen erstellt werden kann.

### C

Im Rahmen der Jahresabrechnungen werden die Daten der Statistik mit denen der Gewichtsaufstellungen zusammengeführt. Auf Basis der abgestimmten IPK-Werte erfolgt eine Ermittlung der Gesamtstückzahlen. Die derart berechneten Stückzahlen und die vorliegenden Gewichte ermöglichen wiederum eine automatische Ableitung des stück- und gewichtsbasierten Entgelts. Da die Daten bereits im Vorfeld durch das System gebucht wurden, resultiert aus der Jahresabrechnung kein eigener Buchungsbeleg. Vielmehr werden die unterjährig gebuchten Forderungen systemseitig zusammengefasst und somit ein Bezug zur Jahresabrechnung hergestellt. Diese Systematik ermöglicht dann die Erfassung und Buchung ggf. notwendiger Korrekturen der Jahresabrechnung im Rahmen eines programmtechnisch entwickelten Abstimm- und Korrekturwesens mit Bezug zu diesem Formular.

Der systemseitig ermittelte IPK-Wert ist unabhängig von dem zeitlich bis zu 1,5 Jahren im Nachlauf abgestimmten IPK-Wert und liefert umso genauere Werte, je mehr vergangenheitsbezogene Daten zu dessen Berechnung zur Verfügung stehen. Vergleichsrechnungen mit und ohne Berücksichtigung des errechneten IPK-Wertes haben ergeben, dass bei Verwendung des Berechnungsmodells die Abweichung der Forderungen pro Abrechnungspartner und Jahr von bis zu 50% auf unter 5% gesenkt werden können.

Durch die Integration des IPK-Simulationsreports sowie des automatisierten Abstimm- und Korrekturwesens in die Entgeltabrechnung haben Korrekturen des IPK-Wertes sofortige Auswirkungen auf die Abrechnung. Stückbasierte Entgeltinformationen werden vollständig, nachvollziehbar und manipulationssicher im System dargestellt.

### Relation 2: Abrechnung Endvergütung <-> Transportabrechnung

Die im Folgenden beschriebene Relation betrifft Brief-, Fracht- und Transitsendungen im Export, für welche mit ausländischen Postgesellschaften End- und Durchgangsvergütungen und mit beauftragten Transportunternehmen Transportentgelte abgerechnet werden.
Zu integrieren sind Gewichtsdaten aus den logistischen Strömen und Daten aus den eingehenden Rechnungen der Transportgesellschaften.

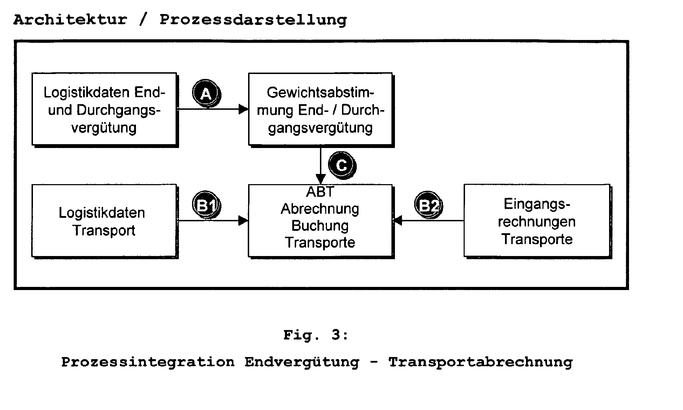

Eine besonders bevorzugte Modulanordnung für eine Prozessintegration einer Transportabrechnung in die Endvergütung ist in Fig. 3 dargestellt.

### A

Auf Basis der im Export produzierten postalischen Versendungen werden Begleitpapiere erstellt, welche die Basis für die Be- und Abrechnung der End- und Durchgangsvergütungen mit ausländischen Postgesellschaften darstellen.

### B1

Die im Export produzierten postalischen Versendungen werden zu Transporten zusammengestellt und an externe Unternehmen übergeben, die sie zur Bestimmungsstelle transportieren und an eine ausländische Postgesellschaft übergeben. Für den Transport wird ein Übergabenachweis erstellt, welcher die Grundlage für die Rechnungsstellung des Transportunternehmens bildet. Auf Basis des Transports wird in SICMA ein Beleg erstellt, welcher gegen die mit zeitlichem Versatz eingehende Rechnung des Transportunternehmens geprüft werden kann. Da nicht sämtliche Transportleistungen nach transportiertem Gewicht abgerechnet werden, erfolgt eine Belegerstellung in Abhängigkeit von Transportart und -weg.

### B2

Die vom Transportunternehmen erstellten Rechnungen werden systemseitig gegen die erfassten Transportbelege geprüft und als Verbindlichkeiten gebucht. Nicht in Rechnung gestellte Gewichte können mit einem entsprechenden Status versehen werden, so dass sie nach Klärung entweder zu einem späteren Zeitpunkt nachgebucht oder im Rahmen des Jahresabschlusses ausgebucht werden können. Zuviel in Rechnung gestellte Gewichte können erfasst und nach Klärung der Umstände ggf. nachgebucht oder storniert werden.

### C

Die Gewichtsabstimmung mit den ausländischen Postgesellschaften kann zum Ergebnis haben, dass das Gewicht der deklarierten postalischen Versendungen korrigiert werden muss. Dies hat sowohl Einfluss auf die mit den Postgesellschaften abzurechnenden End- und Durchgangsvergütungen als auch auf die Abrechnung mit den Transportgesellschaften. Daher werden in SICMA die logistischen Daten des postalischen Versandes in Relation mit den abzurechnenden Transportgesellschaften gespeichert. Änderungen der Gewichte im Rahmen der Gewichtsabstimmung zwischen den Postgesellschaften haben somit direkten Einfluss auf die Abrechnung mit den Transportgesellschaften. Da die Korrekturen mit unterschiedlichen Abrechnungspartnern abgestimmt werden müssen, werden die entsprechenden Änderungen dem Transportunternehmen gesondert gemeldet und abgerechnet. Dem rechnungsprüfenden Mitarbeiter werden die Korrekturen bereits bei der Rechnungsprüfung in SICMA angezeigt, so dass er sie ggf. bereits im Rahmen der normalen Transportabrechnung berücksichtigen kann.

Durch zentrale Datenhaltung der postalischen Versanddaten und der abzurechnenden Transportleistungen können Interdependenzen werden. Änderungen der Gewichte im Kontext der Abstimmung des postalischen Versandes wirken sich direkt auf die Abrechnung der Transportleistungen aus. Die Änderungen können im Rahmen der eigens programmierten Rechnungsprüfung selektiv übernommen und verarbeitet werden, so dass zu jedem Zeitpunkt die Abrechnung der Transportleistungen mit aktuellen Daten möglich ist.

### Relation 3: BdV-Wesen <-> Transportabrechnung

Die im Folgenden beschriebene Relation betrifft Brief-, Fracht- und Transitsendungen im Export, für welche mit ausländischen Postgesellschaften End- und Durchgangsvergütungen und mit beauftragten Transportunternehmen Transportentgelte abgerechnet werden.
Zu integrieren sind Gewichtsänderungen aufgrund von abgestimmten BdV, logistische Daten der exportierten Transporte und Daten aus den eingehenden Rechnungen der Transportgesellschaften.

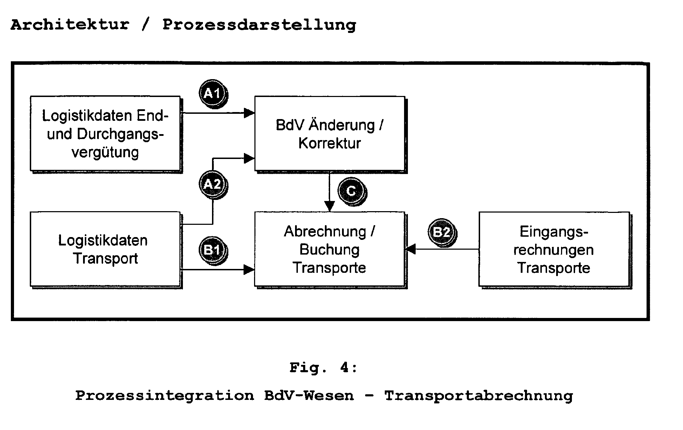

Eine besonders bevorzugte Prozessintegration einer Transportabrechnung in das BdV-Wesen ist in Fig. 4 dargestellt.

### A1

Das BdV-Wesen in SICMA ermöglicht die Erfassung von Korrekturen zum postalischen Versand, die mit Bezug zum Ursprungsbeleg systemseitig gespeichert werden. Über eine Versions- und Statusverwaltung wird der aktuelle Stand für die Berechnung und Abstimmung der exportierten Mengen transparent und nachvollziehbar dargestellt. Durch das integrierte Abstimm- und Korrekturmanagement kann im Kontext der Gewichtsabstimmung zwischen den Postgesellschaften festgestellt werden, ob und inwieweit erstellte BdV in der Abrechnung berücksichtigt wurden bzw. zu berücksichtigen sind.

### A2

Im Rahmen des BdV-Wesens in SICMA können auch Korrekturen zu den im Export erstellten Übergabenachweisen erfasst und mit Bezug zu diesen abgespeichert werden. Über eine Versions- und Statusverwaltung wird der aktuelle Stand für die Berechnung und Abstimmung der exportierten Mengen transparent und nachvollziehbar dargestellt.

### B1

Die im Export produzierten postalischen Versendungen werden zu Transporten zusammengestellt und an externe Transportdienstleister übergeben, die sie zur Bestimmungsstelle transportieren und an eine ausländische Postgesellschaft übergeben. Für den Transport wird ein Übergabenachweis erstellt, welcher die Grundlage für die Rechnungsstellung des Transportunternehmens bildet. Auf Basis des Transports wird in SICMA ein Beleg erstellt, welcher gegen die mit zeitlichem Versatz eingehende Rechnung des Transportunternehmens geprüft werden kann. Da nicht sämtliche Transportleistungen nach transportiertem Gewicht abgerechnet werden, erfolgt eine Belegerstellung in Abhängigkeit von Transportart und -weg.

### B2

Die vom Transportunternehmen erstellten Rechnungen werden systemseitig gegen die erfassten Transportbelege geprüft und als Verbindlichkeiten gebucht. Nicht in Rechnung gestellte Gewichte können mit einem entsprechenden Status versehen werden, so dass diese nach Klärung entweder zu einem späteren Zeitpunkt nachgebucht oder im Rahmen des Jahresabschlusses ausgebucht werden können. Zuviel in Rechnung gestellte Gewichte können erfasst und nach Klärung der Umstände ggf. nachgebucht oder storniert werden.

### C

Durch die im Export erstellten BdV ergeben sich Gewichtsabweichungen bezüglich der postalischen Versendungen und/oder der Transporte. Diese haben sowohl Einfluss auf die mit den Postgesellschaften abzurechnenden End- und Durchgangsvergütungen als auch auf die Abrechnung mit den Transportgesellschaften selbst. Daher werden in SICMA die logistischen Daten der postalischen Versendungen in Relation zu den abzurechnenden Transportgesellschaften gespeichert. Änderungen der Gewichte im Rahmen der BdV-Bearbeitung haben somit direkten Einfluss auf die Abrechnung mit den Transportgesellschaften. Da die Korrekturen mit unterschiedlichen Abrechnungspartnern abgestimmt werden müssen, werden die entsprechenden Änderungen den Transportunternehmen gesondert gemeldet und abgerechnet. Dem rechnungsprüfenden Mitarbeiter werden die Korrekturen durch BdV bei der Rechnungsprüfung in SICMA angezeigt, so dass er sie ggf. bereits im Prozess der normalen Transportabrechnung berücksichtigen kann.

Durch zentrale Haltung der postalischen Versanddaten und der abzurechnenden Transportleistungen werden Interdependenzen zwischen den Abrechnungsprozessen systemseitig dargestellt. Das integrierte BdV-Wesen greift auf diesen Datenbestand direkt zu, ändert ihn entsprechend dem aktuellen Stand der Abstimmungen und speichert die jeweils aktuellen Versionen. Dies gewährleistet die jederzeitige Nachvollziehbarkeit der Historie der Abstimmungen. Änderungen der Gewichte im Rahmen des BdV-Wesens wirken sich direkt auf die Abrechnung der Transportleistungen aus. Die Änderungen können mittels der eigens programmierten Rechnungsprüfung selektiv übernommen und verarbeitet werden, so dass zu jedem Zeitpunkt eine Abrechnung der Transportleistungen mit aktuellen Daten möglich ist.

### Relation 4: BdV-Wesen <-> Abrechnung Endvergütung

Die im Folgenden beschriebene Relation betrifft postalischen Versand von Brief- und Frachtsendungen im Im- und Export, für welche mit ausländischen Postgesellschaften Endvergütungen abgerechnet und zu denen Korrekturen im Rahmen von BdV gemeldet und bearbeitet werden.
Zu integrieren sind logistische Daten mit Endvergütungsrelevanz, sowie Datenänderungen aufgrund abgestimmter BdV. Hierdurch wird eine zeitnahe, vollständige und korrekte Buchung von Forderungen und Verbindlichkeiten gewährleistet.

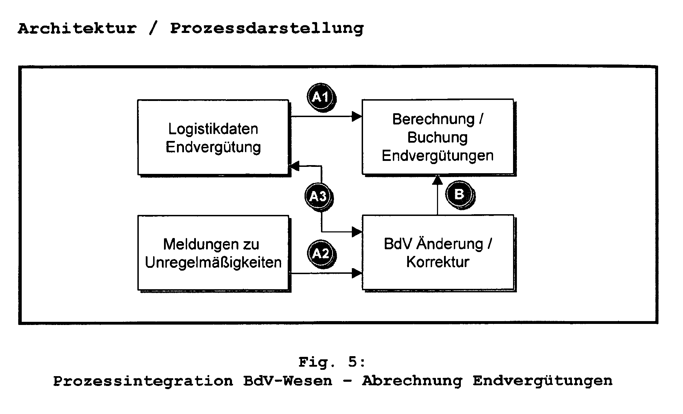

In Fig. 5 ist eine besonders bevorzugte Prozessintegration des BdV-Wesens in eine Abrechnung von Endvergütungen dargestellt.

### A1

Um bereits zum Zeitpunkt der Leistungserbringung eine systemseitige Buchung von Forderungen oder Verbindlichkeiten zu ermöglichen, werden diese zunächst auf Basis der in der Logistik erfassten Sendungsströme ermittelt und anschließend systemseitig als Endvergütungen gebucht. Preisfindung, Kontenfindung und Buchung erfolgen automatisiert. Der manuelle Eingriff ist auf die Bearbeitung von Verarbeitungsfehlern beschränkt.

### A2

Im Wareneingang der Bestimmungsstelle können beim physischen Abgleich der Sendungsmengen mit den Begleitpapieren Unregelmäßigkeiten festgestellt werden, die im Rahmen des BdV-Wesens der jeweiligen Absendestelle gemeldet werden.

### A3

Das in SICMA entwickelte BdV-Bearbeitungsmodul ermöglicht die Erfassung und Bearbeitung abgehender und eingehender BdV. BdV werden in SICMA immer mit Bezug zum logistischen Ursprungsbeleg erzeugt und können aufgrund der zentralen Datenhaltung mit Versionskontrolle immer auf die jeweils aktuellen Logistikdaten zugreifen. Datenänderungen im Rahmen des BdV-Wesens werden mit Bezug zum Ursprungsbeleg als eigenständige Versionen in den Bereich der Logistikdaten zurückgeschrieben.

### B

Die erstellten BdV führen zu Korrekturen der postalischen Versendungen. Diese haben Einfluss auf die mit den Postgesellschaften abzurechnenden Endvergütungen. Beim Speichern einer BdV werden daher in SICMA nicht nur die logistischen Daten korrigiert, sondern auch die hierdurch abzurechnenden Endvergütungen. Dadurch ist zu jedem Zeitpunkt der Stand der Forderungen und Verbindlichkeiten vollständig und korrekt im System nachvollziehbar abgebildet.

Die zentrale Haltung der postalischen Versanddaten inklusive aller Korrekturen ermöglicht die Integration des BdV-Wesens mit der Berechnung und Buchung der Endvergütungen. Das BdV-Wesen greift auf diesen Datenbestand direkt zu, ändert ihn entsprechend dem aktuellen Stand der Abstimmungen und speichert die jeweils gültigen Versionen. Dies gewährleistet die jederzeitige Nachvollziehbarkeit der Historie der Abstimmungen. Änderungen der abrechnungsrelevanten Daten haben dadurch direkten Einfluss auf die Abrechnung der Endvergütungen. Die Änderungen können mittels des eigens programmierten Abstimm- und Korrekturmanagements selektiv übernommen und verarbeitet werden, so dass zu jedem Zeitpunkt die Abrechnung der Endvergütungen mit aktuellen Daten möglich ist.

### Relation 5: BdV-Wesen <-> Nachforschung/Ersatz

Die im Folgenden beschriebene Relation betrifft postalische Versendungen von Brief- und Frachtsendungen im Export, für welche der jeweilige Absender einen Nachforschungsauftrag erteilt hat und zu denen Korrekturen im Rahmen von BdV gemeldet und bearbeitet werden.
Zu integrieren sind Änderungen logistischer Daten mit Endvergütungs- und Haftungsrelevanz, die sich aufgrund abgestimmter BdV ergeben und Daten von Nachforschungsaufträgen zur Be- und Abrechnung von Ersatzleistungen mit ausländischen Postgesellschaften.

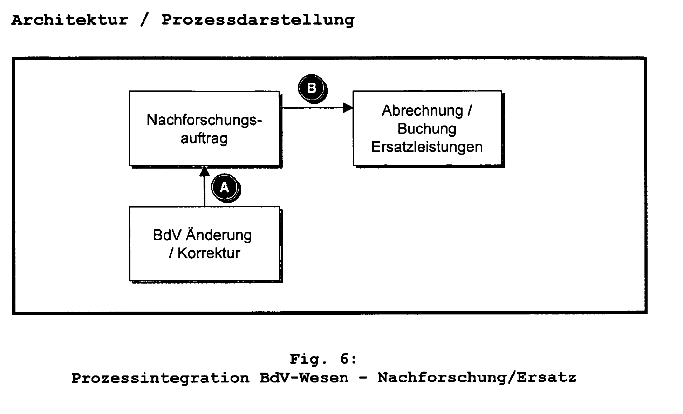

In Fig. 6 ist eine besonders bevorzugte Prozessintegration des BdV-Wesens in die Abrechnung von Nachforschungsaufträgen/Ersatzleistungen dargestellt.

### A

Im Rahmen des in SICMA entwickelten BdV-Wesens kann für haftungsrelevante BdV-Arten die Klärung der Haftungsfrage durch integrierte Bearbeitungsprozesse herbeigeführt werden. Werden Nachforschungsaufträge gestellt, so greift das Nachforschungssystem auf Daten des BdV-Wesens zu. Somit kann der Haftungsanspruch sofort dem am postalischen Versand beteiligten Unternehmen zugeordnet werden (eigene Postgesellschaft, Transportunternehmen, ausländische Postgesellschaft).

### B

Auf Basis der festgestellten Haftungszuordnung werden Ersatzleistungen verursachungsgerecht gebucht.

Die zentrale Datenhaltung der postalischen Versanddaten inklusive aller Korrekturen ermöglicht die Integration des BdV-Wesens mit der Berechnung und Buchung von Ersatzleistungen. Das Nachforschungssystem kann auf diese Daten direkt zugreifen und gemäß dem aktuellen Stand der geklärten Haftungsfrage Ersatzleistungen verursachungsgerecht abrechnen.

### Relation 6: BdV-Wesen <-> Statistik

Die im Folgenden beschriebene Relation betrifft Briefsendungen im Import, welche nach den vertraglich vereinbarten statistischen Verfahren abgerechnet werden.
Zu integrieren sind Daten aus den statistisch erhobenen Stückzahlen, Gewichte aus den logistischen Strömen und Korrekturdaten zu postalischen Versendungen, die sich aufgrund von BdV ergeben.

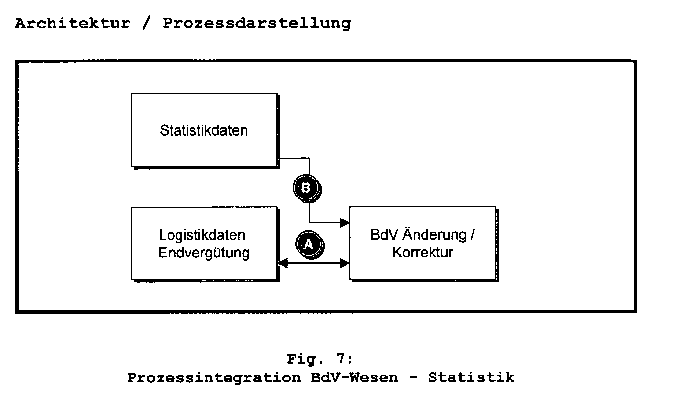

In Fig. 7 ist eine besonders bevorzugte Prozessintegration zum Einbeziehen von Statistikdaten in das BdV-Wesen dargestellt.

### A

Das in SICMA entwickelte BdV-Bearbeitungsmodul ermöglicht die Erstellung abgehender BdV. BdV werden immer mit Bezug zum logistischen Ursprungsbeleg erzeugt und können aufgrund der zentralen Datenhaltung mit Versionskontrolle immer auf die jeweils aktuellsten Logistikdaten zugreifen. Datenänderungen innerhalb des BdV-Wesens werden mit Bezug zum Ursprungsbeleg als eigenständige Versionen in den Bereich der Logistikdaten zurückgeschrieben.

### B

Im Rahmen der statistischen Ermittlungsverfahren werden einzelne Behälter im Wareneingang physisch ausgezählt. Das Ergebnis der Auszählung kann in SICMA erfasst werden. Im Kontext der BdV-Bearbeitung kann auf die Daten der statistischen Auszählung zugegriffen werden. Dadurch lassen sich Abweichungen zwischen den die postalischen Versendungen begleitenden Belegen und dem tatsächlichen Wareneingang systemseitig feststellen. Im Ergebnis können die Daten direkt zu Meldungen (BdV) verarbeitet werden.

Durch zentrale Datenhaltung und -integration werden Unregelmäßigkeiten systemtechnisch identifiziert und über das integrierte BdV-Wesen zu Meldungen verarbeitet, die dann zur Korrektur und Sicherung der Entgeltdaten führen.

### Relation 7: Nachforschung/Ersatz <-> Abrechnung Endvergütung und Transportabrechnung

Die im Folgenden beschriebene Relation betrifft postalischen Versand von Brief- und Frachtsendungen im Export, für welche der Absender einen Nachforschungsauftrag erteilt hat und zu denen Korrekturen im Rahmen von BdV gemeldet und bearbeitet werden.
Zu integrieren sind Änderungen logistischer Daten mit Endvergütungs- und Haftungsrelevanz, die sich aufgrund abgestimmter BdV ergeben, sowie Daten von Nachforschungsaufträgen zur Be- und Abrechnung von Ersatzleistungen mit ausländischen Postgesellschaften.

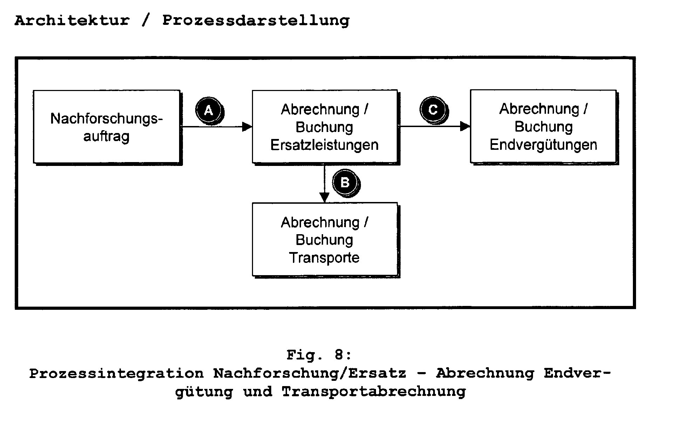

In Fig. 8 ist eine besonders bevorzugte Prozessintegration Nachforschung/Ersatz - Abrechnung Endvergütung und Transportabrechnung dargestellt.

### Ablauf / Integration

### A

Entsprechend dem zuvor dargestellten Prozess wird für einen Nachforschungsauftrag zunächst die Haftungsfrage geklärt und schließlich der Ersatzanspruch verursachungsgerecht erfasst und gebucht.

### B

Sollte ein Ersatzanspruch gegenüber einem Transportunternehmen bestehen, so wird die resultierende Forderung bei der Abrechnung der Verbindlichkeiten gegenüber der Transportgesellschaft berücksichtigt. Dem rechnungsprüfenden Mitarbeiter werden die gegenzurechnenden Ersatzleistungen angezeigt, so dass er sie ggf. bereits im Rahmen der normalen Transportabrechnung berücksichtigen kann.

### C

Sollte ein Ersatzanspruch gegenüber einer Postgesellschaft bestehen (Forderung oder Verbindlichkeit), so können die Ersatzleistungen entweder im Rahmen der Abrechnung von Endvergütungen mit einfließen oder gesondert abgerechnet werden. Die Art der Abrechnung kann über das Stammdatenmanagement in SICMA pro Abrechnungspartner eingestellt werden.

Durch zentrale Datenhaltung und Integration der Prozesse Nachforschung/Ersatz, Transportabrechnung und Abrechnung Endvergütungen können Ersatzansprüche gegenüber Transportunternehmen und Postgesellschaften automatisch zugeordnet und abgerechnet werden. Durch die verursachungsgerechte Zuordnung der Ersatzleistungen werden die entsprechenden Forderungen und Verbindlichkeiten transparent, nachvollziehbar und manipulationssicher im System gespeichert.

### Integration: Anforderungen und Beispiele

SICMA gewährleistet die Einhaltung zentraler Bestandteile der "Grundsätze ordnungsmäßiger DV-gestützter Buchführungssysteme" (GoBS). Mit den GoBS werden die allgemeinen GoB - der Maßstab für die Ordnungsmäßigkeit der Buchführung - für den Bereich der DV-gestützten Buchführung präzisiert.

Nachfolgend werden weitere Vorteile der Erfindung, sowie Maßnahmen zu ihrem Erreichen dargestellt.

Die buchungspflichtigen Geschäftsvorfälle werden richtig, vollständig und zeitgerecht erfasst, wodurch sie sich in ihrer Entstehung und Abwicklung verfolgen lassen (Beleg- und Journalfunktion).

In SICMA erfolgt zum Zeitpunkt des Warenein- und- ausgangs die Umwandlung der abrechnungsrelevanten Logistikdaten in Abrechnungsinformationen. Hieraus resultieren die FIBU-Belege. Korrekturen werden mit Bezug zum Originalbeleg erfasst und als neue (korrigierte) Version in gleicher Art und Weise wie Originalbelege verarbeitet.

Der Belegfluss von den tabellarisch abgespeicherten Logistik-Rohdaten über die Logistikbelege bis hin zu den FIBU-Belegen kann systemseitig jederzeit nachvollzogen werden.

Die Geschäftsvorfälle werden so verarbeitet, dass sie geordnet darstellbar sind und ein Überblick über die Vermögens- und Ertragslage gewährleistet ist (Kontenfunktion).

Zur Gewährleistung einer zeitnahen periodischen Abgrenzung werden die Abrechnungsdaten verursachungsgerecht spätestens im Zuge des Monatsabschlusses zu Buchungsbelegen verarbeitet. Dies führt zu einer periodengerechten Darstellung der Vermögens- uns Ertragslage. Darüber hinaus dienen statistische Verfahren in SICMA zur unterjährigen IPK-Wertberechnung der Minimierung periodenfremder Aufwände / Erträge. Dies entspricht den Grundsätzen nationaler und internationaler Vorschriften zur Rechnungslegung.

Die Abrechnungsvorgänge werden so gespeichert, dass sie nachvollziehbar und prüfbar sind.

Hierzu eignet sich ein Einsatz einer oder mehrerer, besonders vorteilhafterweise aller der nachfolgend genannten Merkmale:
- Die monatlichen systeminternen Zwischenabrechnungen verbinden die Abstimmformulare mit den FIBU-Belegen im Verhältnis 1:1.
- Das Abstimm- und Korrekturwesen beinhaltet eine hierarchische Statusverwaltung. Diese stellt sicher, dass nachfolgende Korrekturebenen nur im Zustand der finalen Freigabe auf der vorherigen aufsetzen können.
- Die Integration sämtlicher Prozesse, welche abrechnungsrelevante Daten erzeugen oder verändern, erlaubt eine transparente Darstellung der Beleghistorie vom Original über Korrekturen bis hin zum Zahlungsausgleich
- Die Statusübergabe ist durch das Shake-Hand-Prinzip klar definiert und jederzeit nachvollziehbar.
- Die Nutzung eines zentralen Datenpools gewährleistet die Durchgängigkeit der Prozesse in ihrem Ablauf und Ergebnis.

Das Verfahren der DV-Buchführung wird durch eine Verfahrensdokumentation, die sowohl die aktuellen als auch die historischen Verfahrensinhalte nachweist, verständlich und nachvollziehbar gemacht. Weiterhin muss gewährleistet sein, dass das in der Dokumentation beschriebene Verfahren dem in der Praxis eingesetzten Programm in seiner Version voll entspricht (Programmidentität).

## Patentansprüche

1. Transaktionssystem zum Verarbeiten von Transaktionsinformationen von wenigstens einem Transportunternehmen, mit einem Mittel zum Erfassen von versandrelevanten Daten, einem Mittel zum Übertragen der versandrelevanten Daten als Datentelegramme und mit einem Abrechnungsmodul (ABT, BBF),
**dadurch gekennzeichnet,**
**dass** das Mittel zum Erfassen von versandrelevanten Daten so ausgestaltet ist, dass die versandrelevanten Daten für eine oder mehrere Transporteinheiten erfasst werden können, dass das Mittel zum Übertragen der versandrelevanten Daten über eine Datenleitung mit dem Abrechnungsmodul(ABT, BBF) verbunden ist, wobei das Abrechnungsmodul (ABT, BBF) wenigstens ein Mittel zum Empfangen des Datentelegramms enthält, dass das Abrechnungsmodul (ABT, BBF) ein Mittel zum Errechnen einer vorläufigen Abrechnungsinformation aufweist, dass das Abrechnungsmodul (ABT, BBF) mit wenigstens einem Speicher für ein Zwischenspeichern der vorläufigen Abrechnungsinformation verbindbar ist, wobei der Speicher einen geschützten Bereich aufweist, der ein nachträgliches Ändern und/oder Löschen der vorläufigen Abrechnungsinformation verhindert.

2. Transaktionssystem nach Anspruch 1,
**dadurch gekennzeichnet,**
**dass** der Speicher so gestaltet ist, dass die vorläufige Abrechnungsinformation fest mit einer Identifikationsangabe verknüpfbar ist.

3. Transaktionssystem nach Anspruch 2,
**dadurch gekennzeichnet,**
**dass** die Identifikationsangabe einer Transporteinheit oder mehreren Transporteinheiten zugeordnet ist.

4. Transaktionssystem nach einem oder mehreren der Ansprüche 1 bis 3,
**dadurch gekennzeichnet,**
**dass** das Abrechnungsmodul (ABT,BBF) und/oder der Speicher mit einer Protokolliereinheit zur Protokollierung von Abrechnungsvorgängen verbindbar ist.

5. Transaktionssystem nach einem oder mehreren der Ansprüche 1 bis 4,
**dadurch gekennzeichnet,**
**dass** mit der vorläufigen Abrechnungsinformation der Statut der Abstimmung gespeichert wird.

6. Transaktionssystem nach einem oder mehreren der Ansprüche 1 bis 5,
**dadurch gekennzeichnet,**
**dass** mit der Abrechnungsinformation der Status des Beleges gespeichert wird.

7. Verfahren zum Befördern und Abrechnen von Sendungen,
**dadurch gekennzeichnet,**
**dass** Transportgüter in Transporteinheiten transportiert werden, wobei ein Einlieferungsort und ein Auslieferungsort eines oder mehrerer der Transporteinheiten ermittelt wird und dass eine Abrechnung der Transportleistung in Abhängigkeit von einem zu erwartenden Transportweg zwischen dem Einlieferungsort und dem Auslieferungsort vorgenommen wird, und dass die Abrechnung in Abhängigkeit von Informationen über die Transporteinheit und/oder die Transporteinheiten durchgeführt wird.

8. Verfahren nach Anspruch 7,
**dadurch gekennzeichnet,**
**dass** wenigstens ein Gewicht von in den Transporteinheiten befindlichen Transportgütern berücksichtigt wird.

9. Verfahren nach einem oder beiden der Ansprüche 7 oder 8,
**dadurch gekennzeichnet,**
**dass** bei der Abrechnung eine zu erwartende Anzahl von in den Transporteinheiten befindlichen Transportgütern berücksichtigt wird.

10. Verfahren nach einem oder mehreren der Ansprüche 7 bis 9,
**dadurch gekennzeichnet,**
**dass** wenigstens ein Teil der Transportgüter Postsendungen sind.

11. Verfahren nach Anspruch 10,
**dadurch gekennzeichnet,**
**dass** die Abrechnung in Abhängigkeit von einer Sendungskategorie und/oder in Abhängigkeit von mehreren Sendungskategorien erfolgt.

12. Verfahren nach einem oder mehreren der Ansprüche 7 bis 11,
**dadurch gekennzeichnet,**
**dass** ein Ergebnis der Abrechnung als eine vorläufige Abrechnungsinformation in einem Speicher gespeichert wird.

13. Verfahren nach Anspruch 12,
**dadurch gekennzeichnet,**
**dass** überprüft wird, ob Änderungen von Eigenschaften der Transporteinheiten und/oder des Transportweges erfolgten, und das für den Fall, dass eine derartige Änderung erfolgte eine weitere vorläufige Abrechnung in Form einer Rechnungsinformation in dem Speicher gespeichert wird.

14. Verfahren nach einem oder beiden der Ansprüche 12 oder 13,
**dadurch gekennzeichnet,**
**dass** überprüft wird, ob ein vorgebbares Ereignis eingetreten ist, und das bei Eintritt des Ereignisses die zuletzt gespeicherte vorläufige Abrechnungsinformation als eine endgültige Abrechnungsinformation **gekennzeichnet** wird.

15. Verfahren nach einem oder mehreren der Ansprüche 7 bis 14,
**dadurch gekennzeichnet,**
**dass** die vorläufige Abrechnungsinformation mit Bezug zu einem logistischen Ursprungsbeleg gespeichert wird.

16. Verfahren nach Anspruch 15,
**dadurch gekennzeichnet,**
**dass** bei einem Ersatz einer gespeicherten vorläufigen Abrechnungsinformation durch eine weitere Abrechnungsinformation gleichfalls ein Bezug zu dem logistischen Ursprungsbeleg gespeichert wird.

17. Verfahren nach einem oder mehreren der Ansprüche 7 bis 16,
**dadurch gekennzeichnet,**
**dass** wenigstens einzelne der gespeicherten vorläufigen Abrechnungsinformationen mit einer Versionsangabe verknüpfbar sind.

## Geänderte Patentansprüche

### Geänderte Patentansprüche gemäss Regel 86(2) EPÜ.

**1.** Versandtransaktionssystem zum Verarbeiten von Transaktionsinformationen von wenigstens einem Transportunternehmen, mit einem Mittel zum Erfassen von versandrelevanten Daten, einem Mittel zum Übertragen der versandrelevanten Daten als Datentelegramme und mit einem Abrechnungsmodul (ABT, BBF),
**dadurch gekennzeichnet,**
**dass** das Mittel zum Erfassen von versandrelevanten Daten so ausgestaltet ist, dass die versandrelevanten Daten für eine oder mehrere Transporteinheiten erfasst werden können, dass das Mittel zum Übertragen der versandrelevanten Daten über eine Datenleitung mit dem Abrechnungsmodul(ABT, BBF) verbunden ist, wobei das Abrechnungsmodul (ABT, BBF) wenigstens ein Mittel zum Empfangen des Datentelegramms enthält, dass das Abrechnungsmodul (ABT, BBF) ein Mittel zum Errechnen einer vorläufigen Abrechnungsinformation aufweist, dass das Abrechnungsmodul (ABT, BBF) mit wenigstens einem Speicher für ein Zwischenspeichern der vorläufigen Abrechnungsinformation verbindbar ist, wobei der Speicher einen geschützten Bereich aufweist, der ein nachträgliches Ändern und/oder Löschen der vorläufigen Abrechnungsinformation verhindert.

**2.** Versandtransaktionssystem nach Anspruch 1,
**dadurch gekennzeichnet,**
**dass** der Speicher so gestaltet ist, dass die vorläufige Abrechnungsinformation fest mit einer Identifikationsangabe verknüpfbar ist.

**3.** Versandtransaktionssystem nach Anspruch 2,
**dadurch gekennzeichnet,**
**dass** die Identifikationsangabe einer Transporteinheit oder mehreren Transporteinheiten zugeordnet ist.

**4.** Versandtransaktionssystem nach einem oder mehreren der Ansprüche 1 bis 3,
**dadurch gekennzeichnet,**
**dass** das Abrechnungsmodul (ABT,BBF) und/oder der Speicher mit einer Protokolliereinheit zur Protokollierung von Abrechnungsvorgängen verbindbar ist.

**5.** Versandtransaktionssystem nach einem oder mehreren der Ansprüche 1 bis 4,
**dadurch gekennzeichnet,**
**dass** mit der vorläufigen Abrechnungsinformation der Status der Abstimmung gespeichert wird.

**6.** Versandtransaktionssystem nach einem oder mehreren der
Ansprüche 1 bis 5,
**dadurch gekennzeichnet,**
**dass** mit der Abrechnungsinformation der Status des Beleges gespeichert wird.

**7.** Verfahren zum Befördern und Abrechnen von Sendungen,
wobei Transportgüter in Transporteinheiten transportiert werden, wobei ein Einlieferungsort und ein Auslieferungsort eines oder mehrerer der Transporteinheiten ermittelt wird und wobei eine Abrechnung der Transportleistung in Abhängigkeit von einem zu erwartenden Transportweg zwischen dem Einlieferungsort und dem Auslieferungsort vorgenommen wird, und wobei die Abrechnung in Abhängigkeit von Informationen über die Transporteinheit und/oder die Transporteinheiten durchgeführt wird,
**dadurch gekennzeichnet,**
**dass** eine Abrechnungsinformation und eine Beleginformation gespeichert werden und dass mit der Abrechnungsinformation der Status eines Beleges gespeichert wird, so dass daraus eine weitere Belegverarbeitung gesteuert werden kann.

**8.** Verfahren nach Anspruch 7,
**dadurch gekennzeichnet, dass** wenigstens ein Gewicht von in den Transporteinheiten befindlichen Transportgütern berücksichtigt wird.

**9.** Verfahren nach einem oder beiden der Ansprüche 7 oder 8,
**dadurch gekennzeichnet,**
**dass** bei der Abrechnung eine zu erwartende Anzahl von in den Transporteinheiten befindlichen Transportgütern berücksichtigt wird.

**10.** Verfahren nach einem oder mehreren der Ansprüche 7 bis 9,
**dadurch gekennzeichnet,**
**dass** wenigstens ein Teil der Transportgüter Postsendungen sind.

**11.** Verfahren nach Anspruch 10,
**dadurch gekennzeichnet,**
**dass** die Abrechnung in Abhängigkeit von einer Sendungskategorie und/oder in Abhängigkeit von mehreren Sendungskategorien erfolgt.

**12.** Verfahren nach einem oder mehreren der Ansprüche 7 bis 11,
**dadurch gekennzeichnet,**
**dass** ein Ergebnis der Abrechnung als eine vorläufige Abrechnungsinformation in einem Speicher gespeichert wird.

**13.** Verfahren nach Anspruch 12,
**dadurch gekennzeichnet,**
**dass** überprüft wird, ob Änderungen von Eigenschaften der Transporteinheiten und/oder des Transportweges erfolgten, und das für den Fall, dass eine derartige Änderung erfolgte eine weitere vorläufige Abrechnung in Form einer Rechnungsinformation in dem Speicher gespeichert wird.

**14.** Verfahren nach einem oder beiden der Ansprüche 12 oder 13,
**dadurch gekennzeichnet,**
**dass** überprüft wird, ob ein vorgebbares Ereignis eingetreten ist, und das bei Eintritt des Ereignisses die zuletzt gespeicherte vorläufige Abrechnungsinformation als eine endgültige Abrechnungsinformation **gekennzeichnet** wird.

**15.** Verfahren nach einem oder mehreren der Ansprüche 7 bis 14,
**dadurch gekennzeichnet,**
**dass** die vorläufige Abrechnungsinformation mit Bezug zu einem logistischen Ursprungsbeleg gespeichert wird.

**16.** Verfahren nach Anspruch 15,
**dadurch gekennzeichnet,**
**dass** bei einem Ersatz einer gespeicherten vorläufigen Abrechnungsinformation durch eine weitere Abrechnungsinformation gleichfalls ein Bezug zu dem logistischen Ursprungsbeleg gespeichert wird.

**17.** Verfahren nach einem oder mehreren der Ansprüche 7 bis 16,
**dadurch gekennzeichnet,**
**dass** wenigstens einzelne der gespeicherten vorläufigen Abrechnungsinformationen mit einer Versionsangabe verknüpfbar sind.

**18.** Verfahren nach einem oder mehreren der Ansprüche 7 bis 17,
**dadurch gekennzeichnet,**
**dass** die Belegverarbeitung so gesteuert wird, dass, solange ein Beleg x noch nicht erzeugt wurde, Daten in den Beleg x einfließen können und dass, wenn der Beleg x erzeugt wurde, keine neuen/geänderten Daten in den Beleg x einfließen können.

**19.** Verfahren nach Anspruch 18,
**dadurch gekennzeichnet,**
**dass** erst wenn der Beleg x abgestimmt ist, ein Beleg y mit Daten aus dem Beleg x erzeugt werden kann.
